# EUROPEAN PATENT APPLICATION

(11) **EP 0 731 114 A1**
(43) Date of publication of application: **11.09.1996**
(21) Application number: 96102572.3
(22) Date of filing: 21.02.1996
(51) Int. Cl.: C08F 210/16, C08F 4/646, C08F 4/647, C08F 4/654, C08L 23/16

(54) **Process for obtaining ethylene-propylene elastomer copolymers with a high purity and controlled molecular weight distribution**

(30) Priority: 07.03.1995 IT MI950431
(71) Applicant: ENICHEM ELASTOMERI S.r.l., I-20124 Milan (IT)
(72) Inventor: Banzi, Viviano, I-44049 Vigarano Maimarda (FE) (IT); Scarpante, Riccardo, Ferrara (IT); Norfo, Luca, Bologna (IT); Loberti, Gianni, Ferrara (IT)
(74) Representative: Gennari, Marco

(57) **Abstract**

Ethylene-propylene elastomer copolymers with a propylene content of between 20 and 55% by weight, produced with a polymerization process in suspension of liquid monomer, without final washing, characterized by a controlled molecular weight distribution.

## Description

The present invention relates to a process for the preparation of ethylene-propylene elastomer copolymers in suspension of liquid monomer, characterized by a controlled molecular weight distribution.

It is known in the art that prevalently amorphous copolymers of ethylene with propylene can be advantageously produced using Ziegler-Natta catalysts (see for example: G. Natta, G. Mazzanti et. al. in Journal of Polymer Science vol. 51 (1961) page 411 and French patent 2027457).

These catalysts generally consist of at least two components: a) a salt of a transition metal belonging to a group from IV to VIII, b) an organometallic compound of a metal belonging to a group from I to IV. A Vanadium compound is preferred as the salt of a transition metal for the production of copolymers characterized by low crystallinity, molecular weight distribution and sufficiently narrow composition. In this case the complete catalytic system comprises a third component (c), capable of raising the productivity of the polymerization expressed as Kg of polymer produced per g of Vanadium. Type "a" components which are particularly used are Vanadium salts with a valence of between three and five such as for example Vanadium halides, Vanadium oxyhalides, Vanadium or Vanadyl alcoholates and Vanadium acetylacetonate. Preferred type "b" components are organometallic compounds of Aluminium such as for example Aluminium trialkyls, Aluminium alkylhalides. Type "c" components are generally halogenated organic compounds such as Chorine alkanes or chlorine esters, for example, CHCl₃, CCl₄, ethyltrichloroacetate or n-butylperchlorocrotonate.

For polymerization processes carried out in suspension of liquid hydrocarbons, which involve operating temperatures not higher than 50°C, a particularly advantageous catalytic system consists of Vanadium triacetylacetonate (component "a"), Aluminiumdiethylmonochloride (component "b"), and n-butylperchlorocrotonate (component "c"). The process in the above suspension is economically advantageous with respect to the technology in solution as the polymer can be easily separated from the non-reacted monomers by a stripping operation with water vapour at 80-100°C. With this technology a wide range of copolymers can be obtained, having satisfactory mechanical and elastic properties to be used for various applications both as raw and vulcanized polymers. The above technology in suspension of liquid monomer also has considerable economic advantages, in particular it is possible to operate with high concentrations of polymer in the reactor without causing great increases in viscosity, there is no use of solvents or suspending agents alien to the polymerization, it is possible to efficiently remove the reaction heat.

The above catalysts based on Vanadium salts generally have low productivities and moreover, when the polymer is separated with stripping with vapour without final washing, the polymer is polluted by considerable quantities of catalytic residues, particularly chlorinated compounds coming from the reaction of the Vanadium salt with the organometallic cocatalyst.

EP-A-546.629 describes the synthesis of elastomer copolymers of ethylene with alpha-olefins in the presence of catalysts based on Vanadium, using a process in suspension of liquid monomers. This process has the disadvantage however of a low productivity and considerable quantities of catalytic residues in the product.

Catalysts which can be used for the copolymerization of ethylene with propylene having a much higher productivity than that provided by systems containing vanadium compounds are described in patents US-A-3.789.036, US-A-4.013.823, Belgian patents 848527, 893443, GB-A-1293814, EP-A-301.894. In the preferred form these catalysts consist of at least: a Titanium compound (I) with the formula Ti(OR)nCl₄₋ₙ wherein R is an aliphatic, cycloaliphatic or aromatic hydrocarbon radical containing from 1 to 20 carbon atoms, n is between 0 and 4); a solid (II) mainly consisting of MgCl₂, magnesiumalkoxyhalide or adducts between MgCl₂ and alcohols; an organometallic compound of aluminium (III) such as for example an Aluminium trialkyl.

The ethylene-propylene copolymers which can be obtained with these systems have a very low content of catalytic residues but have the disadvantage of a wide molecular polydispersity, the Mw/Mn ratio generally being higher than 6. The above polydispersion ratio (Mw/Mn) greatly influences the visco-elastic characteristics of the material and can therefore directly modify its behaviour in extrusion, the processability with roller mixers and with Banbury type internal mixers.

As a confirmation of this, N.P. Cheremisinoff ("Designing EPDMs for smooth-surface extruded articles", Polym. Plast. Technol. Eng. 28(7&8), 691-716, 1989) asserts that EPDMs having a linear chain with a wide polydispersity are the worst candidates for high-speed extrusion if good surface aspects of the material are desired. Again N.P. Cheremisinoff in another publication ("Spotlight on EPDM elastomers", Polym. Plast. Technol. Eng. 31 (7&8), 713-744, 1992) compares the benefits and limitations which the various structural parameters have on the performance of EPDM, and in particular specifies that with limited molecular weight distributions high vulcanization rates, high extrusion rates are obtained with a better surface aspect and low swelling.

In conclusion catalysts based on Titanium have the advantage of a high yield and low catalytic residues, but the disadvantage of not allowing the molecular weight distribution to be controlled.

There was therefore the problem, at least for some processes, of controlling the Mw/Mn value during the synthesis of the copolymer (obviously in the presence of high yield Titanium catalysts) and in particular of reducing it to the desired values for the specific application for which the elastomer was destined. In fact, if the molecular polydispersity is controlled, it is possible to take advantage of the considerable oxidation stability of the ethylene-propylene copolymers, their chemical inertia and their purity to produce end-products with high mechanical and electrical characteristics using both traditional equipment such as calenders and Banbury machines, and high potential extruders, for the processing.

A process has now been found which overcomes the above disadvantages as it enables the production, in the presence of high yield Titanium catalysts, of ethylene-propylene copolymers having a propylene content of between 20 and 55% by weight, characterized by a controlled molecular weight distribution and a low content of catalytic residues. This is made possible by the presence of particular groups of electron-donors.

The general use of electron-donor compounds as components of catalytic systems of the Zeigler-Natta type used for the synthesis of polyolefins is known and widely described in literature.

According to what is specified by F.M. Coutinho and L.C. Santa Maria in Eur. Polym. J., Vol. 27, N°9, pages 989-989 (1991), a Lewis base used as an electron-donor compound in the polymerization of propylene with a Ziegler-Natta catalyst of the type TiCl₃/Aluminium diethylmonochloride, has the effect of modifying the catalytic activity in relation to its chemical structure.

US-A-4.331.561 describes the synthesis of polyolefins using a high yield catalyst consisting of three components:
a) an organometallic compound of Al without Chorine atoms linked to the metal,
b) an electron-donor compound capable of combining with component a),
c) a solid basically consisting of a compound of Ti (IV) supported on a compound of Mg in the presence of a second electron-donor compound,
wherein the electron-donor compound is preferably selected from the group of alkyl silicates or aryl silicates. The catalyst described in US-A-4.331.561 allows polypropylene or copolymers of propylene of the crystalline type to be obtained, characterized by a high isotactic index; if ethylene is used in the polymerization, component b) can be omitted.

It has now been found that particular groups of electron-donor compounds enable the polydispersity of ethylene-propylene elastomer copolymers to be controlled and regulated.

In accordance with this, the present invention relates to a process for the preparation of ethylene-propylene elastomer copolymers in suspension of monomers in the liquid state, in the presence of a catalytic system which comprises:
a) a solid component containing Magnesium-carboxylate and Titanium-carboxylate bonds which can be represented with the formula (I)

   TiMg_{(0.3-20)}X₍₂₋₅₀₎Al₍₀₋₅₎(RCOO)_{(0.1-3)} (I)

   wherein X is a halogen and R is a linear or branched, cycloaliphatic or aromatic hydrocarbon radical, containing at least 4 Carbon atoms;
b) at least one organometallic compound of Aluminium selected from those having the general formula AlR'ₙXₓ₋ₙ (II), wherein R' is an alkyl group, X is a halogen and n is selected from 2 and 3;
   characterized in that the catalytic system additionally comprises an electron-donor compound (c) selected from:
   (c1) esters of mono or polycarboxylic acids having a number of carbon atoms of between 5 and 30,
   (c2) dialkylic or diarylic or alkylaryl ethers having a number of carbon atoms of between 6 and 25,
   (c3) alkyl or aryl alkoxysilanes,
   (c4) aliphatic or cycloaliphatic amines having general formula R₁R₂R₃-N, wherein R₁, R₂, R₃ are selected from -H and C₁-C₆ alkylic radicals with the condition that at the most only one R can be -H, and in addition two radicals can be taken together, thus forming a nitrogenated heterocycle.

Component (a) of the present invention, consisting of a Titanium compound supported on a solid Magnesium compound, is known to experts in the field and its preparation is described in EP-A-523785. In general formula (I), R is an alkylic radical with a number of carbon atoms of more than 4, preferably less than 25.

Component (b) consists of one or more organometallic compounds of Aluminium wherein X is preferably Chlorine. In the compounds (b), n is preferably 3, or the organometallic compound of Aluminium does not contain halogens. In the most preferred form, component (b) is Aluminium triisobutyl (TIBAl).

Component (c) of the present invention consists of a substance which probably acts as a Lewis base with respect to the Aluminium alkyl (b) and/or the Titanium compound (a).

Typical esters which can be used in the present invention selected from those defined in (c1) are ethyl benzoate, methyl p-toluate, methyl p-anisate, diethylphthalate, diisobutylphthalate, ethyl maleate; the esters of benzoic acid are preferable, even more preferable ethyl benzoate.

Typical ethers (c2) are anisol, diisobutylic ether, diisoamylic ether; alkyl aryl ethers are preferable, anisol is even more preferable.

The term alkyl or aryl alkoxysilanes (c3) refers to compounds containing Silicon having general formula Si-Rₙ(OR)₄₋ₙ, wherein R is an alkylic or arylic radical and n is between 1 and 3. Typical examples of (c3) are phenyl triethoxysilane, diphenyldimethoxysilane, hexamethyldisiloxane.

Among the amines (c4), 2,2,6,6-tetramethyl piperidine, triethylamine and N,N'-dimethyl piperazine are particularly efficient, tetramethyl piperidine is more preferable.

The catalytic system used in the polymerization of ethylene-propylene can be prepared by mixing, the order of addition being in no way critical, components (a), (b) and (c). It is preferable however to first interact, in an inert environment and in an inert solvent, the organometallic compound of Aluminium (component b) with the Lewis base (component c), and subsequently add component (a). In this way a suspension in an inert solvent of the catalytic system of the present invention , is obtained. The suspension thus obtained, containing the Aluminium compound (b) in a quantity of between 3 and 15% by weight, preferably between 5 and 10% by weight, can be used directly in the copolymerization phase.

In the catalytic system of the present invention the molar ratio between the Aluminium atoms of component (b) and those of Titanium of component (a) are not critical, but it is preferable however to operate in such a way as to have a molar ratio Al/Ti of between 200 and 600.

The molar ratio between the aluminium alkyl (component b) and the Lewis base (component c) depends on the type of Lewis base used; generally, however, the above ratio is between 0.5 and 25 and is selected to reach the desired Mw/Mn ratio, with the maximum catalytic yield.

The polymerization process is carried out in a suspension of monomers in the liquid state, according to the copolymerization technique which is well known to experts in the field, at temperatures of between 0 and 50°C, preferably between 40 and 50°C, and at such pressures as to reach the desired ratio between the propylene moles (or higher olefins) and ethylene moles, in liquid phase.

To obtain copolymers of the EPM type with a propylene content of between 20 and 55% by weight at a temperature of between 30 and 40°C, this ratio is preferably between 5 and 25.

When the copolymers are prepared at a temperature of between 40 and 50°C with a propylene content of between 25 and 55% by weight, this ratio is preferably between 7 and 20.

Molecular weight regulators such as hydrogen, zinc diethyl and other compounds normally used for this purpose, can be present in the polymerization phase.

The following examples provide a better understanding of the present invention.

In all the experimental examples the following procedures were carried out:

### PREPARATION OF THE CATALYTIC SYSTEM

A solution consisting of aluminium alkyl (component b) in hexane at 10% weight/volume and the Lewis base (component c) is prepared in a glass funnel maintained in a nitrogen atmosphere. After a contact time of 0.5 hours at room temperature, 50% of this solution is poured into a glass 50 ml flask equipped with a tap at the bottom and maintained in a nitrogen atmosphere, into which the solid component (a) in a hexanic solution is immediately fed. The catalytic suspension thus obtained is poured into a steel barrel placed under the polymerization autoclave. The pouring is completed by washing the flask with the remaining 50% of the solution containing the organometallic compound and Lewis base.

### PREPARATION OF THE POLYMERS

The preparation of the polymers is carried out in a 2.7 litre autoclave according to the following procedure:

The autoclave is flushed with propylene containing Aluminium triisobutyl at 5% weight/volume, and is then washed with fresh propylene. Liquid "polymerization grade" propylene is fed at room temperature, the autoclave is then brought to the polymerization temperature and hydrogen and ethylene gas are introduced through an immersed tube in the preset ratio so as to reach the partial pressures desired.

The catalytic system, contained in the barrel described above, is then fed into the autoclave, using an overpressure of nitrogen. The pressure of the autoclave is kept constant during the test by feeding ethylene from a weight-controlled cylinder. At the end of the polymerization the residual monomers are degassed and the autoclave is emptied. The polymer is finally homogenized with a roller mixer and characterized.

### ANALYSES

The following measurements were made on the polymers thus obtained:
- Propylene content via IR of the polymers in the form of films with a thickness of 0.2 mm using an FTIR spectrophotometre of PERKIN-ELMER model 1760. The propylene content was determined by measuring the ratio between the band absorbances at 4390 and 4255 cm-1 and using a calibration curve calibrated with standard copolymers;
- Intrinsic viscosity. The measurements were carried out in Orthodichlorobenzene at 135°C with the following procedure: the fall times of the solvent and solutions with an increasing concentration of the polymer under examination were measured using an Ubbelhode-type viscometre. The extrapolation of the reduced and the inherent viscosities at zero concentration provided the value of the intrinsic viscosity;
- Molecular weight distribution. The analyses were carried out with the gel permeation chromatography technique in orthodichlorobenzene at 135°C, using an ALC/GPC 150 "WATERS"instrument equipped with refraction index detector and a series of 10 micron PL GEL columns with a porosity of 133, 104, 105, 106. The calibration curve used for the calculation was obtained using standard samples of polystyrene monodispersed by applying the Mark-Houwink equation valid for linear polyethylene and polypropylene; the molecular weights were corrected in accordance with the composition by the SCHOLTE equation (TH.G. SCHOLTE, N.L.J. MEIJERINK et al.:J. Appl. Polym. Sci., 1984, 29, 3763 - 3782).

### EXAMPLES

The examples shown in table 1 were carried out using ethyl benzoate, anisol, diphenyl dimethoxysilane and tetramethyl piperidine as component (c). Examples 1 to 20 refer to the behaviour in the synthesis of ethylene-propylene copolymers of a catalyst obtained according to the disclosure of patent EP-A-523785 and having the following weight composition:
Ti = 12.1%; Mg = 6.5%; Cl = 46%; Al = 1.4%; organic residue = 34%.

The comparative examples 1C and 1CA show how, without the Lewis base (component c), the ethylene-propylene copolymers have a wide molecular polydispersity and are characterized by a ratio Mw/Mn of more than 8.

As can be seen from the data shown in the table, each electron-donor compound affects the behaviour of the catalyst in a different way; on decreasing the molar ratio Al/component c, there is in fact a reduction in the Mw/Mn value together with a reduction in the yield.

The selection of component (c) and its concentration with respect to component (b) is therefore made in relation to the balance between the polydispersity and desired purity of the copolymer.

Examples 2 to 4 compared with examples 5 to 9 show that ethyl benzoate provides a sufficient reduction in the Mw/Mn maintaining yields higher than 200 kg/g Ti only when the Al/base ratio is higher than 7 molar.

Example 12, compared with examples 10, 11 and 13, shows that anisol can be used in a very limited range of Al/compound (c); only in the range of about 5 is the Mw/Mn ratio about 5 and the yield > than 200 kg/g Ti.

Examples 14 to 16 compared with example 17 show that diphenyl dimethoxysilane provides the best results (Mw/Mn can be reduced to about 4 with yields > than 200 kg/g Ti) if used at a ratio Al/comp.(c) higher than 7.

Examples 18 to 21 show that with tetramethylpiperidine in the whole range of the Al/comp.(c) ratio of between 1 and 10, high yields are obtained and that it is possible to obtain a Mw/Mn of between 4 and 6, with a yield of more than 200 kg/g Ti per Al/comp.(c) ratios of between 1 and 2.5.

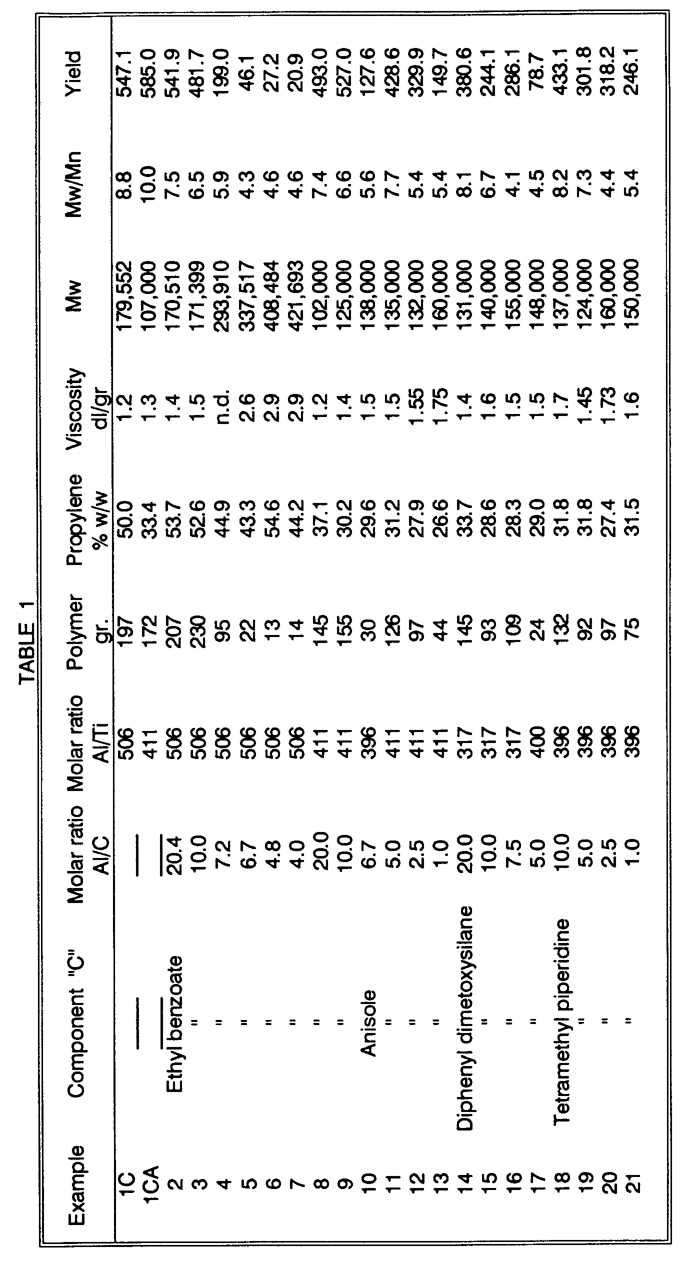

## Claims

1. Process for the preparation of ethylene-propylene elastomer copolymers in a suspension of monomers in the liquid state, in the presence of a catalytic system which comprises:
a) a solid component containing Magnesium-carboxylate and Titanium-carboxylate bonds which can be represented by the formula (I)
TiMg_{(0.3-20)}X₍₂₋₅₀₎Al₍₀₋₅₎(RCOO_{(0.1-3)} (I)
wherein X is a halogen and R is a linear or branched, cycloaliphatic or aromatic hydrocarbon radical, containing at least 4 Carbon atoms;
b) at least one organometallic compound of Aluminium selected from those having the general formula (II) AlR'ₙXₓ₋ₙ, wherein R' is an alkyl group, X is a halogen and n is selected from 2 and 3;
characterized in that the catalytic system additionally comprises an electron-donor compound (c) selected from:
(c1) esters of mono or polycarboxylic acids having a number of carbon atoms of between 5 and 30,
(c2) dialkylic or diarylic or alkylaryl ethers having a number of carbon atoms of between 6 and 25,
(c3) alkyl or aryl alkoxysilanes,
(c4) aliphatic or cycloaliphatic amines having general formula R₁R₂R₃-N, wherein R₁, R₂, R₃ are selected from -H and C₁-C₆ alkylic radicals with the condition that at the most only one R can be -H, and in addition two radicals can be taken together, thus forming a nitrogenated heterocycle.

2. Process according to claim 1, characterized in that the esters of carboxylic acids (c1) are esters of aromatic carboxylic acids.

3. Process according to claim 2, characterized in that the esters of aromatic carboxylic acids are C₂-C₅ alkylic esters of benzoic acid.

4. Process according to claim 3, characterized in that the ester of the aromatic carboxylic acid is ethyl benzoate.

5. Process according to claim 1, characterized in that the ethers (c2) are selected from C₇-C₂₀ alkyl-aryl ethers.

6. Process according to claim 5, characterized in that the alkyl-aryl ether is anisol.

7. Process according to claim 6, characterized in that the compound containing Silicon is selected from phenyl triethoxysilane, diphenyldimethoxysilane, hexamethyldisiloxane.

8. Process according to claim 7, characterized in that the compound containing Silicon is diphenyl trimethoxysilane.

9. Process according to claim 1, characterized in that the amine (c4) is tetramethylpiperidine.

10. Process according to any of the previous claims, characterized in that the molar ratio between the Aluminium alkyl (component b) and the electron-donor compound (component c) is between 0.5 and 25, the molar ratio between the Aluminium alkyl of component (b) and the Titanium of component (a) is between 200 and 600, and the polymerization temperature is between 0°C and 40°C.

11. Process according to claim 10, characterized in that the polymerization temperature is between 40°C and 50°C.

12. Process according to claim 1, characterized in that the catalytic system is prepared by first interacting, in an inert environment and in an inert solvent, the organometallic compound of aluminium (component b) with the Lewis base (component c), and subsquently adding component (a).
